# EUROPÄISCHE PATENTSCHRIFT

(11) **EP 1 275 880 B1**
(45) Veröffentlichungstag und Bekanntmachung des Hinweises auf die Patenterteilung: **17.12.2008**
(21) Anmeldenummer: 02014147.9
(22) Anmeldetag: 25.06.2002
(51) Int. Cl.: F16H 3/30, F16H 63/30, F16H 63/08

(54) **Schaltvorrichtung für das Zahnradgetriebe einer Werkzeugmaschine**
Gear shifting mechanism for a machine
Dispositif de changement de vitesses pour l'engrenage d'une machine-outil

(30) Priorität: 06.07.2001 DE 20111282 U
(43) Veröffentlichungstag der Anmeldung: 15.01.2003
(73) Patentinhaber: TTS Tooltechnic Systems AG & Co. KG, 73240 Wendlingen (DE)
(72) Erfinder: Kirchner, Manfred, 73230 Neidlingen (DE)
(74) Vertreter: Bregenzer, Michael

(56) Entgegenhaltungen:
- EP-A- 0 695 892
- GB-A- 1 205 821
- US-B1- 6 220 109

## Beschreibung

Die Erfindung betrifft eine Schaltvorrichtung für das Zahnradgetriebe einer Werkzeugmaschine, das zwei auf einer ersten Welle angeordnete erste Zahnräder und zwei auf einer zur ersten Welle parallelen zweiten Welle angeordnete zweite Zahnräder aufweist, wobei eines der beiden Zahnradpaare feststehend und das andere Zahnradpaar in axialer Richtung zwischen zwei Schaltstellungen verschiebbar ist, in denen jeweils ein erstes Zahnrad und ein zweites Zahnrad miteinander kämmen, mit zwei dem verschiebbaren Zahnradpaar zugeordneten Einrückhebeln.

Bei in dieser Weise ausgestatteten Werkzeugmaschinen - es handelt sich insbesondere um Handwerkzeugmaschinen - kann das jeweilige Werkzeug, beispielsweise ein Bohrer oder Fräser, mit unterschiedlichen Rotationsgeschwindigkeiten betrieben werden. Hierzu wird mittels der Schaltvorrichtung auf den jeweils gewünschten Getriebegang umgeschaltet.

Beim Umschalten treffen die Zähne des betreffenden verschiebbaren Zahnrades regelmäßig nicht von selbst in Zahnzwischenräume des zugeordneten feststehenden Zahnrades, so dass das verschiebbare Zahnrad zunächst stirnseitig gegen das feststehende Zahnrad stößt und erst dann einrücken kann, wenn man eine der Wellen etwas gedreht hat.

Ausgehend hiervon liegt der vorliegenden Erfindung die Aufgabe zugrunde, eine Schaltvorrichtung der eingangs genannten Art zu schaffen, die möglichst einfach im Aufbau und in der Handhabung ist und aus möglichst wenigen Einzelteilen besteht, so dass sie außerdem kostengünstig hergestellt werden kann.

Diese Aufgabe wird erfindungsgemäß dadurch gelöst, dass die beiden in axialer Richtung beiderseits des verschiebbaren Zahnradpaares angeordneten Einrückhebel jeweils von einer parallel zur axialen Richtung verschiebbar geführten Hebeleinheit gebildet werden, wobei den beiden Hebeleinheiten eine die Einrückhebel in Richtung aufeinander zu belastende Federeinrichtung und eine vom Benutzer zu betätigende Betätigungseinrichtung mit einer zwischen die beiden Hebeleinheiten greifenden Betätigungspartie zugeordnet ist, so dass beim Betätigen die Betätigungspartie je nach Betätigungsrichtung auf die eine oder die andere Hebeleinheit einwirkt.

Stößt das betreffende verschiebbare Zahnrad beim Umschalten gegen das zugeordnete feststehende Zahnrad, bewegt die Betätigungspartie die den in Betätigungsrichtung vorne liegenden Einrückhebel bildende Hebeleinheit weiter in seine der jeweiligen Schaltstellung entsprechende Endstellung. Dabei hebt dieser Einrückhebel von dem verschiebbaren Zahnradpaar ab. Der andere Einrückhebel bleibt dagegen unter Spannen der Federeinrichtung zusammen mit dem verschiebbaren Zahnradpaar stehen, bis das feststehende und das verschiebbare Zahnrad durch Drehen einer der Wellen in die das Einrücken ermöglichende Drehstellung gelangen. Der andere Einrückhebel bewirkt dann unter der Federkraft das Einrücken.

Beim Umschalten in den anderen Getriebegang laufen die gleichen Vorgänge in umgekehrter Richtung ab. Für beide Umschaltvorgänge ist nur eine einzige Federeinrichtung erforderlich.

Die Betätigungseinrichtung kann vom Benutzer sofort in ihre dem jeweiligen Getriebegang entsprechende Endstellung gebracht werden, so dass beim Schalten nicht darauf geachtet werden muss, ob das jeweilige verschiebbare Zahnrad an das zugewandte feststehende Zahnrad anstößt oder sofort einrückt.

Zweckmäßige Ausgestaltungen der Erfindung sind in den Unteransprüchen angegeben.

Ein Ausführungsbeispiel der Erfindung wird nun anhand der Zeichnung erläutert. Es zeigen:
- Figur 1: eine erfindungsgemäße Schaltvorrichtung mit den beiden Zahnradpaaren des Getriebes in von der Werkzeugmaschine gesonderter Darstellung, wobei das verschiebliche Zahnradpaar eine Mittelstellung zwischen den beiden jeweils einem Getriebegang entsprechenden Schaltstellungen einnimmt (die unterhalb der Zeichenebene angeordnete Betätigungseinrichtung wurde der Übersichtlichkeit wegen weggelassen),
- Figur 2: einen die Schaltvorrichtung enthaltenden Ausschnitt aus Figur 1, wobei von der dem Betrachter zugewandten Hebeleinheit im Bereich der Betätigungseinrichtung ein Stück weggeschnitten ist, um die Betätigungseinrichtung sichtbar zu machen,
- Figur 3: die aus den Figuren 1 und 2 hervorgehende Schaltvorrichtung im zu den Figuren 1 und 2 rechtwinkeligen Längsschnitt gemäß der Schnittlinie III-III,
- Figur 4: die Anordnung nach Figur 1 beim Einrücken eines der beiden Getriebegänge, wobei das betreffende verschiebbare Zahnrad am zugewandten feststehenden Zahnrad anstößt,
- Figur 5: die Anordnung nach Figur 4 im eingerückten Zustand, so dass sich das verschiebbare Zahnradpaar in seiner einen Schaltstellung befindet,
- Figur 6: wiederum die der Figur 1 entsprechende Anordnung beim Einrücken des anderen Getriebeganges in der der Figur 4 entsprechenden Situation und
- Figur 7: die Anordnung nach Figur 6 im eingerückten Zustand, in dem sich die Schaltvorrichtung in ihrer anderen Schaltstellung befindet.

Eine in der Zeichnung nicht dargestellte Werkzeugmaschine, insbesondere eine Handwerkzeugmaschine wie Bohrmaschine od. dgl., enthält ein Zahnradgetriebe 1 mit zwei auf einer ersten Welle 2 drehfest angeordneten ersten Zahnrädern 3, 4 und zwei auf einer zur ersten Welle 2 parallelen zweiten Welle 5 drehfest angeordneten zweiten Zahnrädern 6, 7. Bei jedem Zahnradpaar 3, 4 bzw. 6, 7 weisen die beiden Zahnräder 3, 4 bzw. 6, 7 einen unterschiedlichen Durchmesser auf.

Beim dargestellten Ausführungsbeispiel ist die erste Welle 2 motorseitig angeordnet und bildet eine vom Maschinenmotor angetriebene Antriebswelle. Dabei sitzen die beiden ersten Zahnräder 3, 4 in axialer Richtung feststehend auf der ersten Welle 2.

Die zweite Welle 5 bildet dagegen die über das Zahnradgetriebe 1 angetriebene Abtriebswelle, mit der das jeweilige Maschinenwerkzeug, beispielsweise ein Bohrer oder ein Fräser, verbunden wird. Dabei sind die beiden zweiten Zahnräder 6, 7 in axialer Richtung verschiebbar auf der zweiten Welle 5 angeordnet. Dies wird im dargestellten Falle durch einen sich in Wellen-Längsrichtung erstreckenden Führungssteg 8 an der Außenseite der zweiten Welle 5 und eine entsprechende Nutausnehmung 9 am Innenumfang der zweiten Zahnräder 6, 7 erreicht, wobei der Führungssteg 8 die Nutausnehmung 9 durchgreift.

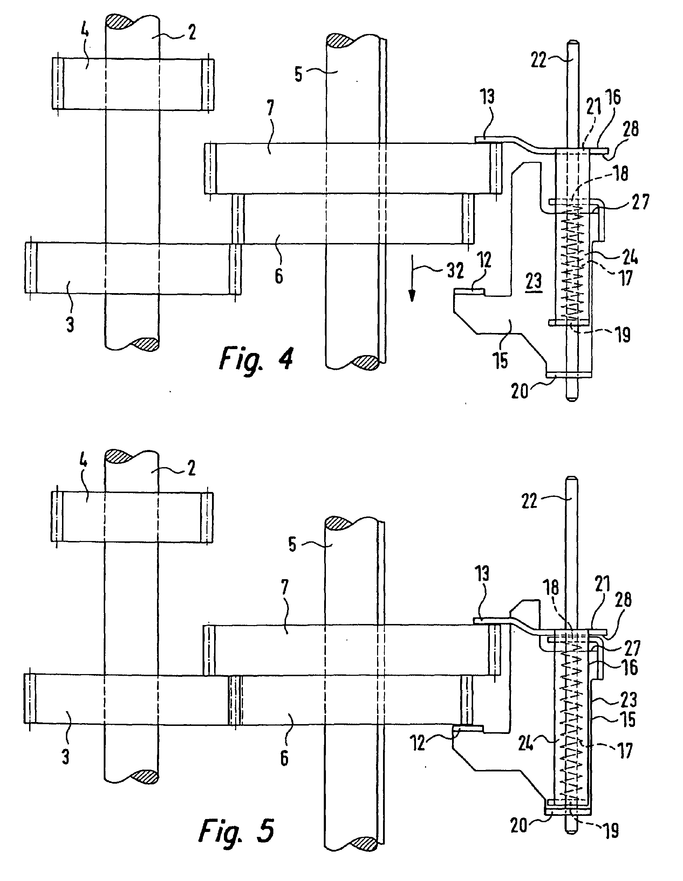

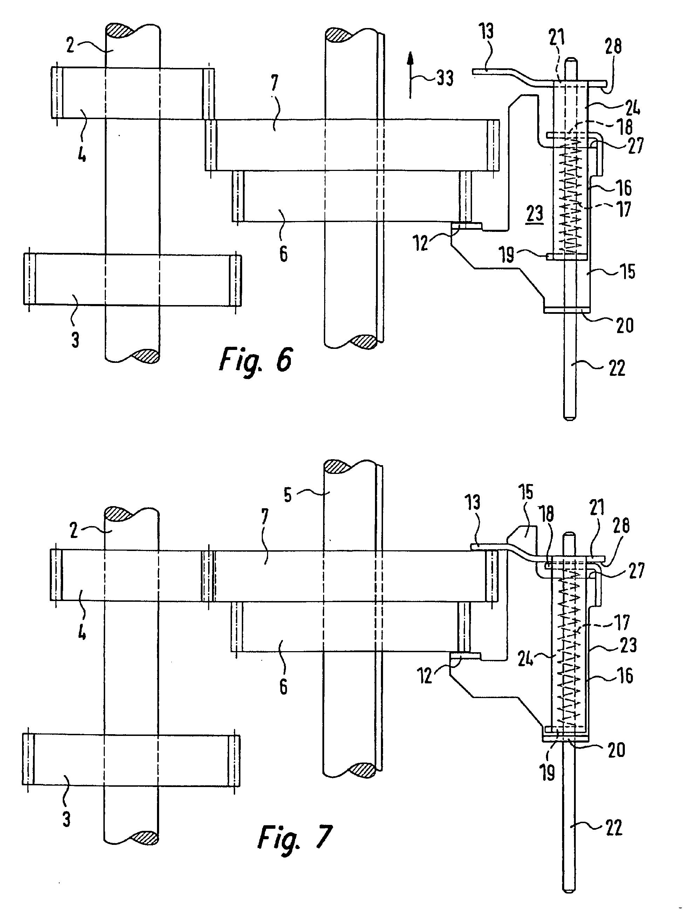

Bei dem Zahnradgetriebe 1 handelt es sich um ein Zweiganggetriebe, so dass die zweite Welle 5 je nach dem eingeschalteten Getriebegang mit einer von zwei unterschiedlichen Geschwindigkeiten rotieren kann. Hierzu kann das zweite Zahnradpaar 6, 7 zwischen zwei jeweils einem Getriebegang entsprechenden Schaltstellungen in axialer Richtung verschoben werden, die in den Figuren 5 und 7 dargestellt sind. In jeder Schaltstellung kämmen ein erstes Zahnrad 3 bzw. 4 und ein zweites Zahnrad 6 bzw. 7 miteinander. Aufgrund der unterschiedlichen Durchmesser der Zahnräder ergibt sich in jeder Schaltstellung ein anderes Übersetzungsverhältnis.

Die beiden zweiten Zahnräder 6, 7 sind fest miteinander verbunden. Beim Ausführungsbeispiel liegen sie unmittelbar aneinander an. Dies muss jedoch nicht unbedingt so sein.

Ferner weisen die beiden ersten Zahnräder 3, 4 in axialer Richtung einen mit Bezug auf die axiale Abmessung 10 des zweiten Zahnradpaares 6, 7 größeren Abstand 11 voneinander auf, wobei das zweite Zahnradpaar 6, 7 in axialer Richtung zwischen den beiden ersten Zahnrädern 3, 4 angeordnet ist.

In Abwandlung des dargestellten Ausführungsbeispieles könnten die verschiebbaren Zahnräder auch auf der motorseitigen Antriebswelle und die feststehenden Zahnräder auf der werkzeugseitigen Abtriebswelle angeordnet sein, oder es könnte der Abstand zwischen den verschiebbaren Zahnrädern größer als die axiale Abmessung der feststehenden Zahnräder sein.

Dem verschiebbaren Zahnradpaar, das beim Ausführungsbeispiel von den beiden zweiten Zahnrädern 6, 7 gebildet wird, sind zwei Einrückhebel 12, 13 zugeordnet, mit denen das verschiebliche Zahnradpaar verschoben wird. Dabei sind die beiden Einrückhebel 12, 13 in axialer Richtung beiderseits des verschiebbaren Zahnradpaares 6, 7 angeordnet, so dass der Einrückhebel 12 der dem Zahnrad 7 abgewandten Stirnseite des Zahnrades 6 und der Einrückhebel 13 der dem Zahnrad 6 abgewandten Stirnseite des Zahnrades 7 benachbart ist.

Die beiden Einrückhebel 12, 13 sind Bestandteile einer Schaltvorrichtung 14, wobei die beiden Einrückhebel 12, 13 jeweils von einer Hebeleinheit 15 bzw. 16 gebildet werden. Die beiden Hebeleinheiten 15, 16 sind parallel zur axialen Richtung der Wellen 2, 4 verschiebbar geführt, so dass das Verschieben des Zahnradpaars 6, 7 durch Verschieben der beiden Hebeleinheiten 15, 16 bewerkstelligt werden kann. Den beiden Hebeleinheiten 15, 16 ist eine Federeinrichtung 17 zugeordnet, die an den beiden Hebeleinheiten 15, 16 so angreift, dass die beiden Einrückhebel 12, 13 in Richtung aufeinander zu belastet sind.

Die beiden Hebeleinheiten 15, 16 weisen ferner jeweils eine parallel zur axialen Richtung der Wellen 2, 5 verschiebbar geführte Lagerpartie 18 bzw. 19 auf, wobei die beiden Lagerpartien 18, 19 mit Abstand zueinander angeordnet sind. Die Federeinrichtung 17 befindet sich zwischen den beiden Lagerpartien 18, 19 und belastet diese in Richtung voneinander weg. Die Anordnung ist in diesem Zusammenhang ferner so getroffen, dass die beiden Lagerpartien 18, 19, werden die beiden Einrückhebel 12, 13 durch das Einwirken äußerer Kräfte voneinander weg gedrückt, unter Spannen der Federeinrichtung 17 aufeinander zu bewegt werden.

Die beiden Hebeleinheiten 15, 16 weisen ferner jeweils eine ebenfalls parallel zur axialen Richtung der Wellen 4, 5 verschiebbar geführte Führungspartie 20 bzw. 21 auf, die mit Abstand zur Lagerpartie 18 bzw. 19 der betreffenden Hebeleinheit 15, 16 angeordnet ist. Dabei ist die Lagerpartie 18 bzw. 19 jeder Hebeleinheit 15 bzw. 16 zwischen der Lagerpartie 19 bzw. 18 und der Führungspartie 21 bzw. 20 der jeweils anderen Hebeleinheit 16 bzw. 15 angeordnet. Oder anders ausgedrückt befinden sich die beiden Lagerpartien 18, 19 zwischen den beiden Führungspartien 20, 21, wobei die Führungspartie 20 der einen Hebeleinheit 15 der Lagerpartie 19 der anderen Hebeleinheit 16 und die Führungspartie 21 der anderen Hebeleinheit 16 der Lagerpartie 18 der einen Hebeleinheit 15 außen benachbart ist.

Mittels der Lagerpartien und der Führungspartien sind die beiden Hebeleinheiten 15, 16 jeweils an zwei Stellen mit Abstand zueinander geführt.

Die Hebeleinheiten 15, 16 sind mit ihren Lagerpartien 18, 19 und mit ihren gegebenenfalls wie beim Ausführungsbeispiel vorhandenen Führungspartien 20, 21 auf einem sie durchgreifenden Führungsbolzen 22 verschiebbar gelagert. Der Führungsbolzen 22 verläuft parallel zur axialen Richtung der Wellen 2, 5 und ist in seiner Längsrichtung feststehend am Maschinengehäuse fixiert. Die Federeinrichtung 17 wird zweckmäßigerweise von einer Schraubenfeder gebildet, die von dem Führungsbolzen 22 durchgriffen wird.

Jede der beiden Hebeleinheiten 15 bzw. 16 weist ferner eine sich dem Führungsbolzen 22 entlang erstreckende Stegpartie 23 bzw. 24 auf, durch die die Lagerpartie 18 bzw. 19 und die Führungspartie 20 bzw. 21 der betreffenden Hebeleinheit 15 bzw. 16 miteinander verbunden sind. Die Einrückhebel 12, 13 sind an geeigneter Stelle an die Hebelheiten 15, 16 angesetzt.

Die beiden Hebeleinheiten 15, 16 sind zweckmäßigerweise Metallblech-Biegeteile. Sie sind ferner jeweils einstückig ausgebildet. Da die Hebeleinheiten 15, 16 mit ihren Lagerpartien 18, 19 und Führungspartien 20, 21 ineinander greifen und dabei durch die Federeinrichtung 17 in axialer Richtung aneinander gehalten werden, bilden sie eine auf dem Führungsbolzen 22 verschiebliche Einheit.

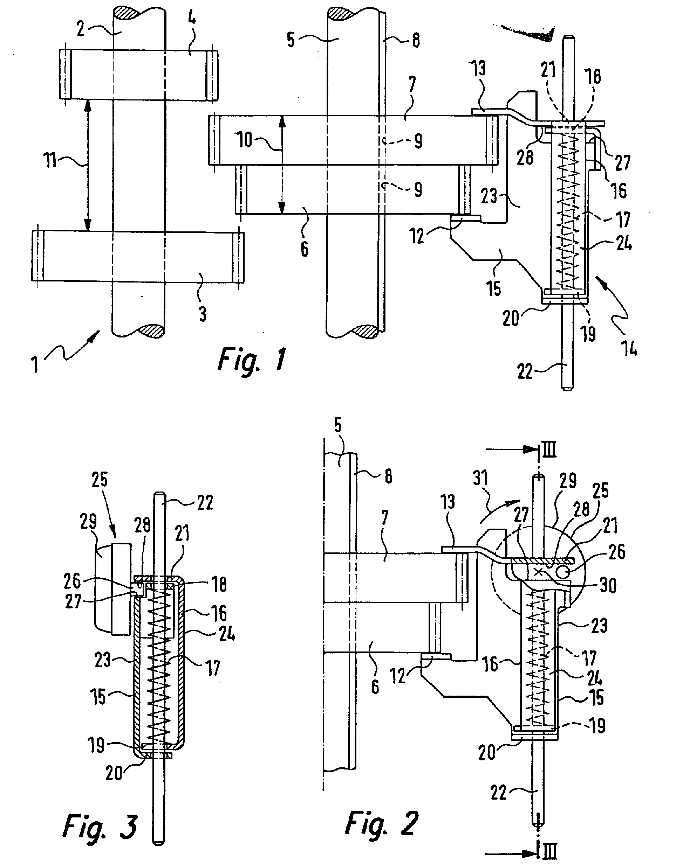

Das Verschieben der Hebeleinheiten 15, 16 erfolgt mittels einer vom Benutzer zu betätigenden Betätigungseinrichtung 25, die nur in den Figuren 2 und 3 dargestellt ist. Die Betätigungseinrichtung weist eine zwischen die beiden Hebeleinheiten 15, 16 greifende Betätigungspartie 26 auf, so dass beim Betätigen der Betätigungseinrichtung 25 die Betätigungspartie 26 je nach Betätigungsrichtung auf die eine oder die andere Hebeleinheit 15, 16 einwirkt. Die Hebeleinheiten 15, 16 bilden also jeweils eine Angriffsstelle 27 bzw. 28 für die Betätigungspartie 26, wobei sich die beiden Angriffsstellen 27, 28 in axialer Richtung mit Abstand gegenüber liegen, so dass die Betätigungspartie 26 zwischen sie eingreifen kann. Je nachdem, in welche Richtung die Betätigungspartie 26 bewegt wird, greift sie an der einen oder anderen Angriffsstelle 27 bzw. 28 an, so dass die zu der betreffenden Angriffsstelle gehörende Hebeleinheit unter Mitnahme der anderen Hebeleinheit verschoben wird.

Beim Ausführungsbeispiel weist die Betätigungseinrichtung 25 einen in nicht dargestellter Weise drehbar am Maschinengehäuse gelagerten Drehgriff 29 auf, wobei die Betätigungspartie 26 exzentrisch zur Drehachse 30 vorsteht. Die Betätigungspartie 26 wird beim Ausführungsbeispiel von einem stirnseitig von der Stirnseite des Drehgriffs 29 abstehenden Mitnahmebolzen gebildet.

In Figur 1 ist eine Zwischenstellung dargestellt, in der das von den beiden Einrückhebeln 12, 13 gehaltene verschiebbare Zahnradpaar 6, 7 eine unwirksame Zwischenstellung einnimmt, in der keines der verschiebbaren Zahnräder 6, 7 mit einem der feststehenden Zahnräder 3, 4 in Eingriff steht. Die Betätigungspartie 26 nimmt dabei ihre insbesondere aus Figur 2 hervorgehende Zwischenstellung ein.

Verdreht man den Drehgriff 29 in Richtung gemäß Pfeil 31, wirkt die exzentrische Betätigungspartie 26 auf die Angriffsstelle 27 der Hebeleinheit 15 ein, so dass die beiden Hebeleinheiten 15, 16 in Richtung gemäß Pfeil 32 ( siehe Figur 4) verschoben werden. Dabei gelangt das in Bewegungsrichtung vorne angeordnete verschiebbare Zahnrad 6 zum zugewandten feststehenden Zahnrad 3 und stößt an dieses an, falls die Drehstellung der beiden Zahnräder 3, 6 nicht ein sofortiges Einrücken ermöglicht. Während der in Bewegungsrichtung 32 vorne befindliche Einrückhebel 12, betätigt durch die aus der Zwischenstellung um 90° verschwenkte Betätigungspartie 26, unter Entfernung vom am feststehenden Zahnrad 3 anstoßenden verschiebbaren Zahnrad 6 abhebt und in seine aus Figur 4 hervorgehende Endstellung gelangt, bleibt der in Bewegungsrichtung 32 hintere Einrückhebel 13 unter Anlage am anderen verschiebbaren Zahnrad 7 zusammen mit dem verschiebbaren Zahnradpaar 6, 7 stehen, wobei sich die Federeinrichtung 17 spannt, so dass der Einrückhebel 13 in Richtung gemäß Pfeil 32 mit der Federkraft beaufschlagt ist. Sobald nun durch Verdrehen einer der Wellen 4, 5 die Zähne des verschiebbaren Zahnrades 6 in eine zu den Zahnzwischenräumen des feststehenden Zahnrades 3 deckende Lage kommen, verschiebt der Einrückhebel 13 unter der Federkraft das verschiebbare Zahnradpaar 6, 7 weiter in Richtung 32, so dass die beiden Zahnräder 3, 6 miteinander kämmen und das verschiebbare Zahnradpaar seine aus Figur 5 hervorgehende Schaltstellung einnimmt, die einem der beiden der Getriebegänge entspricht, so dass die mit dem Werkzeug verbundene Welle 5 bei eingeschaltetem Maschinenmotor mit dem durch das Übersetzungsverhältnis der Zahnräder 3, 6 vorgegebenen Übersetzungsverhältnis rotiert.

Verdreht man die Betätigungseinrichtung 25 aus der Zwischenstellung gemäß den Figuren 1 bis 3 dagegen in dem Pfeil 31 entgegengesetzter Richtung, nimmt die Betätigungspartie 26 die Hebeleinheit 16 unter Einwirkung auf die Angriffsstelle 28 in dem Pfeil 32 entgegengesetzter Richtung 33 mit, so dass der in Bewegungsrichtung 33 hintere Einrückhebel 12, der mit dem in Bewegungsrichtung vorderen Einrückhebel 13 über die Federeinrichtung 17 bewegungsgekoppelt ist, das verschiebbare Zahnradpaar 6, 7 in Richtung gemäß Pfeil 33 verschiebt. Es ergibt sich dann die aus Figur 6 hervorgehende Situation, die der Figur 4, nur in entgegengesetzter Richtung, entspricht, d.h. das in Bewegungsrichtung 33 vorne liegende, verschiebbare Zahnrad 7 stößt gegen das feststehende Zahnrad 4, so dass sich der Einrückhebel 13 von dem verschiebbaren Zahnrad 7 entfernt. Durch anschließendes Verdrehen einer der Wellen 2, 5 kann das verschiebbare Zahnrad 7 in das feststehende Zahnrad 4 eingreifen, so dass das verschiebbare Zahnradpaar 6, 7 in seine zweite Schaltstellung gemäß Figur 7 gelangt und damit der zweite Getriebegang eingeschaltet ist. Die Anordnung gemäß Figur 7 entspricht der Anordnung gemäß Figur 5, wiederum in entgegengesetzter Richtung. In dieser zweiten Schaltstellung ist die Betätigungspartie 26 mit Bezug auf die Zwischenstellung gemäß den Figuren 1 bis 3 um 90° entgegen Pfeil 31 verschwenkt. In den beiden Schaltstellungen nimmt die Betätigungspartie 26 somit parallel zur Längsrichtung der Wellen 2, 5 zwei einander entgegengesetzte Positionen ein.

## Patentansprüche

1. Schaltvorrichtung für das Zahnradgetriebe einer Werkzeugmaschine, das zwei auf einer ersten Welle angeordnete erste Zahnräder und zwei auf einer zur ersten Welle parallelen zweiten Welle angeordnete zweite Zahnräder aufweist, wobei eines der beiden Zahnradpaare feststehend und das andere Zahnradpaar in axialer Richtung zwischen zwei Schaltstellungen verschiebbar ist, in denen jeweils ein erstes Zahnrad und ein zweites Zahnrad miteinander kämmen, mit zwei dem verschiebbaren Zahnradpaar zugeordneten Einrückhebeln, **dadurch gekennzeichnet, dass** die beiden in axialer Richtung beiderseits des verschiebbaren Zahnradpaares (6, 7) angeordneten Einrückhebel (12, 13) jeweils von einer parallel zur axialen Richtung verschiebbar geführten Hebeleinheit (15, 16) gebildet werden, wobei den beiden Hebeleinheiten (15, 16) eine die Einrückhebel (12, 13) in Richtung aufeinander zu belastende Federeinrichtung (17) und eine vom Benutzer zu betätigende Betätigungseinrichtung (25) mit einer zwischen die beiden Hebeleinheiten (15, 16) greifenden Betätigungspartie (26) zugeordnet ist, so dass beim Betätigen die Betätigungspartie (26) je nach Betätigungsrichtung auf die eine oder die andere Hebeleinheit (15, 16) einwirkt.

2. Schaltvorrichtung nach Anspruch 1, **dadurch gekennzeichnet, dass** die beiden Hebeleinheiten (15, 16) jeweils eine verschiebbar geführte Lagerpartie (18, 19) aufweisen, wobei die beiden Lagerpartien (18, 19) mit Abstand zueinander angeordnet sind und die Federeinrichtung (17) zwischen den beiden Lagerpartien (18, 19) angeordnet ist und diese in Richtung voneinander weg belastet.

3. Schaltvorrichtung nach Anspruch 2, **dadurch gekennzeichnet, dass** die beiden Hebeleinheiten (15, 16) jeweils eine verschiebbar geführte, mit Abstand zur Lagerpartie (18, 19) der betreffenden Hebeleinheit (15, 16) angeordnete Führungspartie (20, 21) aufweisen, wobei die Lagerpartie (18, 19) jeder Hebeleinheit (15, 16) zwischen der Lagerpartie (18, 19) und der Führungspartie (20, 21) der jeweils anderen Hebeleinheit (15, 16) angeordnet ist.

4. Schaltvorrichtung nach Anspruch 2 oder 3, **dadurch gekennzeichnet, dass** die Hebeleinheiten (15, 16) mit ihren Lagerpartien (18, 19) und gegebenenfalls Führungspartien (20, 21) auf einem sie durchgreifenden Führungsbolzen (22) verschiebbar gelagert sind.

5. Schaltvorrichtung nach Anspruch 4, **dadurch gekennzeichnet, dass** die Federeinrichtung (17) von einer von dem Führungsbolzen (22) durchgriffenen Schraubenfeder gebildet wird.

6. Schaltvorrichtung nach einem der Ansprüche 1 bis 5, **dadurch gekennzeichnet, dass** die beiden Hebeleinheiten (15, 16) Metallblech-Biegeteile sind.

7. Schaltvorrichtung nach einem der Ansprüche 1 bis 6, **dadurch gekennzeichnet, dass** die beiden Hebeleinheiten (15, 16) jeweils einstückig ausgebildet sind.

8. Schaltvorrichtung nach einem der Ansprüche 1 bis 7, **dadurch gekennzeichnet, dass** die Betätigungseinrichtung (25) einen verdrehbar am Maschinengehäuse gelagerten Drehgriff (29) aufweist, wobei die Betätigungspartie (26) exzentrisch zur Drehachse (30) vorsteht.

## Claims

1. Switching device for the gear unit of a machine tool, comprising two gears disposed on a first shaft and two gears disposed on a second shaft extending parallel to the first shaft, wherein one of the two pairs of gears is fixed and the other pair of gears is movable in the axial direction between two switching positions in each of which a first gear and a second gear mesh, and further comprising two engaging levers assigned to the movable pair of gears, **characterised in that** each of the two engaging levers (12, 13) disposed on both sides of the movable pair of gears (6, 7) is represented by a lever unit (15, 16) movably guided parallel to the axial direction, wherein a spring device (17) loading the two engaging levers (12, 13) towards one another and an operating device (25) operated by the user and provided with an operating section (26) dipping between the two lever units (15, 16) are assigned to the two lever units (15, 16), so that the operating section (26) when operated acts on one or the other lever unit (15, 16) depending on the operating direction.

2. Switching device according to claim 1, **characterised in that** each of the two lever units (15, 16) comprises a movably guided bearing section (18, 19), wherein the two bearing sections (18, 19) are arranged at a distance from one another and the spring device (17) is disposed between the two bearing sections (18, 19), loading them away from one another.

3. Switching device according to claim 2, **characterised in that** each of the two lever units (15, 16) comprises a guide section (20, 21) arranged at a distance from the bearing section (18, 19) of the respective lever unit (15, 16), wherein the bearing section (18, 19) of each of the lever units (15, 16) is disposed between the bearing section (18, 19) and the guide section (20, 21) of the other lever unit (15, 16).

4. Switching device according to claim 2 or 3, **characterised in that** the lever units (15, 16) are movably mounted on a guide pin (22) passing through them with their bearing sections (18, 19) and possibly with their guide sections (20, 21).

5. Switching device according to claim 4, **characterised in that** the spring device (17) is represented by a coil spring through which the guide pin (22) passes.

6. Switching device according to any of claims 1 to 5, **characterised in that** the two lever units (15, 16) are bent sheet metal parts.

7. Switching device according to any of claims 1 to 6, **characterised in that** each of the two lever units (15, 16) is designed as a single piece.

8. Switching device according to any of claims 1 to 7, **characterised in that** the operating device (25) comprises a rotary handle (29) rotatably mounted on the machine housing, the operating section (26) projecting eccentrically relative to the axis of rotation (30).

## Revendications

1. Dispositif de commutation pour la transmission à engrenages d'une machine-outil, qui présente deux premières roues dentées placées sur un premier arbre et deux deuxièmes routes dentées placées sur un deuxième arbre parallèle au premier arbre, dans lequel l'une des deux paires de roues dentées est immobile et l'autre paire de roues dentées peut être déplacée dans la direction axiale entre deux positions de commutation, dans lesquelles à chaque fois une première roue dentée et une deuxième roue dentée s'engrènent l'une dans l'autre, avec deux leviers d'engrènement associés à la paire de roues dentées mobiles, **caractérisé en ce que** les deux leviers d'engrènement (12, 13) placés dans la direction axiale des deux côtés de la paire de roues dentées mobiles (6, 7) sont formés chacun par une unité à levier (15, 16) guidée de manière mobile parallèlement à la direction axiale, dans lequel il est associé aux deux unités à levier (15, 16) un dispositif à ressort (17) chargeant les leviers d'engrènement (12, 13) en direction l'un de l'autre ainsi qu'un dispositif de manoeuvre (25) devant être actionné par l'utilisateur et comprenant une partie de manoeuvre (26) s'engageant entre les deux unités à levier (15, 16), de sorte que, lors de l'actionnement, la partie de manoeuvre (26) agit selon la direction de manoeuvre sur l'une ou l'autre unité à levier (15, 16).

2. Dispositif de commutation selon la revendication 1, **caractérisé en ce que** les deux unités à levier (15, 16) présentent chacune une partie support (18, 19) guidée mobile, les deux parties supports (18, 19) étant placées à distance l'une de l'autre et le dispositif à ressort (17) étant placé entre les deux parties support (18, 19) et chargeant celles-ci dans le sens d'un écartement l'une par rapport à l'autre.

3. Dispositif de commutation selon la revendication 2, **caractérisé en ce que** les deux unités à levier (15, 16) présentent chacune une partie de guidage (20, 21) guidée mobile et placée à distance de la partie support (18, 19) de l'unité à levier concernée (20, 21), la partie support (18, 18) de chaque unité à levier (15, 16) étant placée entre la partie support (18, 19) et la partie de guidage (20, 21) de l'autre unité à levier (15, 16) respective.

4. Dispositif de commutation selon la revendication 2 ou 3, **caractérisé en ce que** les unités à levier (15, 16) sont montées mobiles avec leurs parties supports (18, 19) et éventuellement leurs parties de guidage (20, 21) sur un goujon de guidage (22) les traversant.

5. Dispositif de commutation selon la revendication 4, **caractérisé en ce que** le dispositif à ressort (17) est formé par un ressort hélicoïdal traversé par le goujon de guidage (22).

6. Dispositif de commutation selon l'une des revendications 1 à 5, **caractérisé en ce que** les deux unités à levier (15, 16) sont des pièces pliées en tôle métallique.

7. Dispositif de commutation selon l'une des revendications 1 à 6, **caractérisé en ce que** les deux unités à levier (15, 16) sont réalisées chacune d'une seule pièce.

8. Dispositif de commutation selon l'une des revendications 1 à 7, **caractérisé en ce que** le dispositif de manoeuvre (25) présente une poignée rotative (29) montée rotative sur le boîtier de machine, la partie de manoeuvre (26) formant saillie de façon excentrique par rapport à l'axe de rotation (30).
